# EUROPEAN PATENT SPECIFICATION

(11) **EP 2 041 672 B1**
(45) Date of publication and mention of the grant of the patent: **22.02.2017**
(21) Application number: 07763870.8
(22) Date of filing: 09.07.2007
(51) Int. Cl.: G06F 17/30, G06F 17/24

(54) **METHODS AND APPARATUS FOR REUSING DATA ACCESS AND PRESENTATION ELEMENTS**
VERFAHREN UND VORRICHTUNGEN ZUR WIEDERVERWENDUNG VON DATENZUGANG UND PRÄSENTATIONSELEMENTEN
PROCÉDÉS ET APPAREIL POUR RÉUTILISER DES ÉLÉMENTS DE PRÉSENTATION ET D'ACCÈS DE DONNÉES

(30) Priority: 09.07.2006 US 806789 P
(43) Date of publication of application: 01.04.2009
(73) Proprietor: Microsoft Canada Inc., Halifax NS B3J 2X2 (CA)
(72) Inventor: SANBORN, Roger, Redmond, WA 98052 (US); OLTMANN, Grant, Redmond, WA 98052 (US)
(74) Representative: Grünecker Patent- und Rechtsanwälte PartG mbB
(86) International application number: PCT/CA2007/001207
(87) International publication number: WO 2008/006197

(56) References cited:
- US-A1- 2002 133 484
- US-A1- 2002 169 788
- US-A1- 2003 152 277
- US-A1- 2005 160 110
- M. WORRING ET AL: "Automatic indexing of text and graphics in technical manuals", IEEE INTERNATIONAL CONFERENCE ON MULTIMEDIA AND EXPO, 2001. ICME 2001., 1 January 2001 (2001-01-01), pages 1156-1159, XP55007003, DOI: 10.1109/ICME.2001.1237880 ISBN: 978-0-76-951198-6
- S.C Kabel: "The role of ontologies in the material handling processes", Dissertation, 20 October 2004 (2004-10-20), pages 36-64, XP55007009, Retrieved from the Internet: URL:http://dare.uva.nl/document/74624 [retrieved on 2011-09-13]

## Description

### Technical Field

This invention relates to information technology systems that retrieve and present data, and more particularly that present selected data from one or more databases in the form of reports, tables, graphs, charts or other presentation formats.

### Background

Effective management of data has become an important function in most businesses. Many businesses maintain one or more databases that contain information relevant to the business. Available computer software tools permit data from databases to be extracted and presented in various ways.

These tools suffer from a number of common failings including:
(a) they make the report document design process difficult for a non-technical computer user to complete without assistance from a database-savvy IT person; and
(b) they only facilitate sharing or reusing entire documents.

As such, they can require their users to recreate the same subparts of documents repeatedly.

Some publications in this field include: US 20060041589A1 (Helfman et al.) entitled System and Method for Clipping, Repurposing, and Augmenting Document Content; US20050171965A1 (Fujimoto et al.) entitled Contents Reuse Management Apparatus and Contents Reuse Support Apparatus; US20050108619A1 (Theall et al.) entitled System and Method for Content Management; US20050131903A1 (Margolus et al.) entitled Data Repository and Method for Promoting Network Storage of Data; US20030046282A1 (Carison et al.) entitled Managing Reusable Software Assets; and, US20030204487A1 (Sssv et al.) entitled: A System of Reusable Components for Implementing Data Warehousing and Business Intelligence Solutions.

The foregoing examples of the related art and limitations related thereto are intended to be illustrative and not exclusive. Other limitations of the related art will become apparent to those of skill in the art upon a reading of the specification and a study of the drawings.
Further, M. Worring et al. "Automatic indexing of test and graphic in technical manuals" IEEE International Conference on multimedia and Expo, ICME 2001, 01. Jan 2001, p.156-159, discloses a technique for automatic indexing of content in technical manuals. It is described that technical manuals contain multiple media in form of text and graphics. As atomic components of a documents text and graphics are described as logical primitives. As examples, electrical components and wires in a drawing, paragraphs, captions, and emphasized text primitives in the text body are outlined. As the basis for documents analysis, layout primitives are defined. As examples for layout primitives in graphical drawings, basic shapes like lines, strings, rectangles, icons, circles and the like are described. As layout primitives for text, pieces of text with consistent font type and indentation style are described. As a result of the analysis, both, text and graphics are represented as XML tagged fragments.
In addition, S.C. Kabel "The role of ontologies in the material handling processes", Dissertation, 20 October 2004, pages 36-64, describes structured content of electronic documents in the form of Interactive Electronic Technical Manuals. Further, a tool for document analysis and indexing of structured source documents is described. It is described, that the tool carves up technical manuals into text and image fragments, indexes these fragments, and stores them into an object-oriented database. It is outlined, that the segmentation of images is based on identification of lines, regions, boxes, and the like using image processing techniques and OCR for text. Images are converted to SVG to search the content of the image for components. As components in a drawing, boxes with text and directed lines are described.
Finally, US 200311 52277 A1 describes a technique by which a document image is analyzed for the purposes of establishing a searchable data structure characterizing ground-truthed contents of the document represented by the document image. It is described that the technique operates by segmenting a document image into a set of image objects, and linking the image objects with fields that store metadata. The image objects are grouped according to characteristics suggesting that the image objects may have common ground-truthed metadata. A database of image objects with ground-truthed metadata is formed. Ground-truthing based on paired image objects and metadata is facilitated.
Therefore, it is the object of the present invention to provide improved methods and systems for creating and editing documents which present information.
This objective problem is solved by the subject matter of the independent claims.
Preferred embodiments are the subject of the dependent claims.

The following embodiments and aspects thereof are described and illustrated in conjunction with systems, tools and methods which are meant to be exemplary and illustrative, not limiting in scope. In various embodiments, one or more of the above-described problems have been reduced or eliminated, while other embodiments are directed to other improvements.

One aspect of the invention provides a method of reusing information, including the steps of retrieving a document from a first database; identifying a fragment within the document; generating metadata associated with the fragment; storing a record associated with the fragment and the metadata in a second database, the second database searchable for the fragment for insertion of said fragment in a second document.

The metadata may include user-specified metadata; or semantic metadata; and may include fragment type information; user-specified descriptive information; values parsed from said document; or values obtained from said document using an API. The record may include elements of the fragment and the metadata associated with said fragment. The elements of the fragment may include a data source identifier, a data specification and a presentation format. The fragment metadata may include fragment dependency data that is associated with a top-level dependency or is associated with a dependency in a sub-element of the fragment.

Another aspect of the invention provides a method of providing information including the steps of providing a document; searching a database for a fragment amongst a plurality of fragments, the database indexing the fragments using metadata associated with each of the fragments; inserting the fragment into said document; and saving the document in a second database. The metadata may include user-specified metadata; or semantic metadata; and may include fragment type information; user-specified descriptive information; values parsed from said document; or values obtained from said document using an API. The record may include elements of the fragment and the metadata associated with said fragment. The elements of the fragment may include a data source identifier, a data specification and a presentation format. The fragment metadata may include fragment dependency data that is associated with a top-level dependency or is associated with a dependency in a sub-element of the fragment.

Another aspect of the invention provides a document editable by a user, including a fragment, wherein when the document is edited the fragment is identified, metadata is associated with the fragment, and a record associated with the fragment is stored in a database of fragment records. The metadata may include user-specified metadata; or semantic metadata; and may include fragment type information; user-specified descriptive information; values parsed from said document; or values obtained from said document using an API. The record may include elements of the fragment and the metadata associated with said fragment. The elements of the fragment may include a data source identifier, a data specification and a presentation format. The fragment metadata may include fragment dependency data that is associated with a top-level dependency or is associated with a dependency in a sub-element of the fragment.

Another aspect of the invention provides a system for editing a document, including means for retrieving a document from a first database; means for identifying a fragment within said document; means for associating metadata with said fragment; means for storing a record associated with said fragment in a second database; means for searching said second database for said record associated with said fragment; and means to insert said fragment into a second document.

Another aspect of the invention provides a system for editing documents, including a fragment discovery engine for identifying a fragment within a document; a fragment metadata associator for generating metadata for said fragment; a document editor for inserting said fragment in a second document; a fragment search engine; a database of records, each of said records associated with a related fragment and metadata associated with said related fragment; a user interface for locating said fragment from said database; and a first database for storage of said document.

Another aspect of the invention provides for a method of reusing information, including the steps of retrieving a document from a database; identifying a fragment within the document; generating metadata associated with the fragment; and storing a record associated with the fragment and said metadata in the database, the database searchable for said fragment for insertion of the fragment in a second document.

Another aspect of the invention provides for a method of providing information, including the steps of providing a document; searching a database for a fragment amongst a plurality of fragments, the database indexing said fragments using metadata associated with each of the fragments; inserting the fragment into the document; and saving the document in the database.

Another aspect of the invention provides for a system for editing a document, including means for retrieving a document from a database; means for identifying a fragment within the document; means for associating metadata with the fragment; means for storing a record associated with the fragment in the database; means for searching the second database for the record associated with the fragment; and means to insert the fragment into a second document.

In addition to the exemplary aspects and embodiments described above, further aspects and embodiments will become apparent by reference to the drawings and by study of the following detailed descriptions.

### Brief Description of Drawings

Exemplary embodiments are illustrated in referenced figures of the drawings. It is intended that the embodiments and figures disclosed herein are to be considered illustrative rather than restrictive.
Figure 1 is a block diagram of apparatus according to an illustrative embodiment of the invention.
Figure 2 is a schematic diagram illustrating information that may be present in or referenced by a fragment.
Figure 3 is a flowchart illustrating an example method according to one embodiment of the invention.

### Description

Throughout the following description specific details are set forth in order to provide a more thorough understanding to persons skilled in the art. However, well known elements may not have been shown or described in detail to avoid unnecessarily obscuring the disclosure. Accordingly, the description and drawings are to be regarded as being illustrative and not restrictive.

The invention relates to methods and apparatus (e.g. computer systems) for creating and editing documents which present data from one or more data sources. For example, the documents may display the data in a visually meaningful format.

A document may include components that receive data from one or more data sources, and present the data. Such documents are commonly referred to as reports or report documents. The systems and methods according to the invention may be used with any report document format(s). The data sources may include one or more databases. The component may include a query definition that specifies a query for selecting relevant data from a database. The component may specify a manner of presenting the data. For example, the component may specify that the data be presented as:
(a) a graph;
(b) a chart;
(c) a table;
(d) a spreadsheet;
(e) some other visually observable representation of the data;
(f) or the like.

Each of these components may be called a "fragment".

Systems according to this invention facilitate reuse of fragments or parts of fragments. Users of such systems can design and edit documents that make meaningful use of the data which has been stored in databases and is relevant to their enterprise.

A method according to an example embodiment of the invention involves: identifying reusable fragments in existing documents; discovering identified fragments that are available for reuse, and reusing selected fragments in the creation of further documents.

Apparatus according to an example embodiment of the invention includes means for identifying reusable fragments in existing documents; means for discovering identified fragments that are available for reuse; and, means for reusing selected fragments in the creation of further documents. Some or all of these means may be incorporated into a computer software application that can be used to create and/or modify (or edit) documents which present data read from one or more data sources.

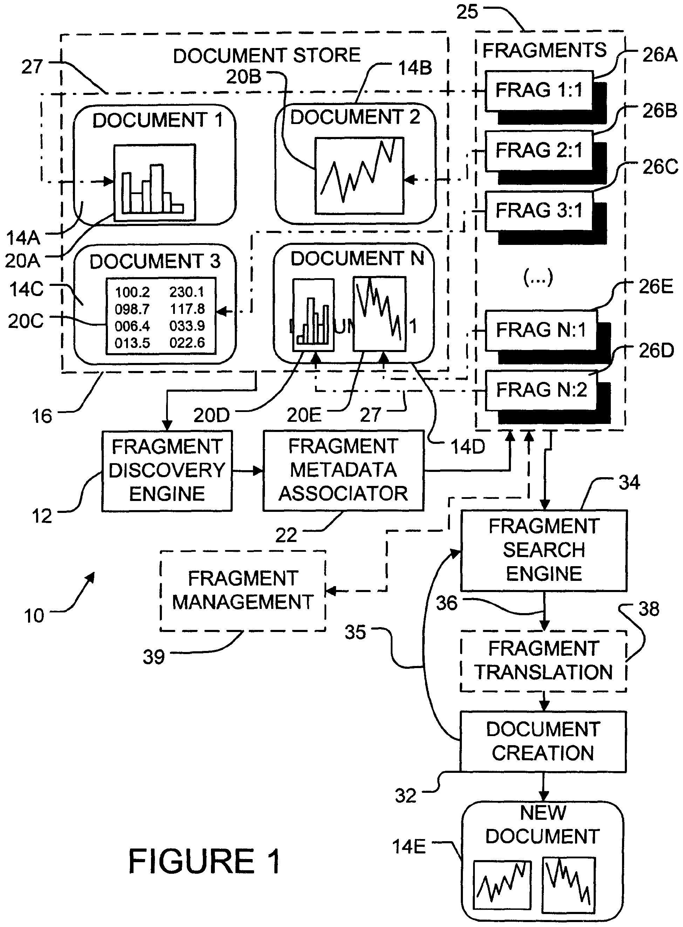

Figure 1 is a block diagram illustrating a system **10.** The components of system **10** may be software processes that are executed by a data processor and act on data accessible to the data processor, or may be firmware embedded on a computer board, or chip, or the like. System **10** includes a fragment discovery engine **12.** Fragment discovery engine **12** identifies potentially reusable fragments **20** (individually identified as **20A** to **20E**) within documents **14** (individually identified as **14A** to **14D**) in a document store **16**. Document store **16** may be distributed and may comprise multiple locations in which documents **14** are stored in one or more databases.

A fragment metadata associator **22** associates metadata with the fragments located by fragment discovery engine **12**. The metadata may come from any suitable source or combination of sources. Possible sources for metadata include:
(a) information that can be extracted from the fragment, such as fragment type information;
(b) user-specified descriptive information (which may be referred to as "anecdotal metadata"). The user-specified information may be received from a user at the time a fragment is created or later;
(c) information retrieved by parsing values from the document; and/or
(d) information obtained by using supplied APIs to read values from the document.

Records **26** identifying each fragment are stored in a fragment store **25**. Fragment store **25** contains a record **26** (individually identified as **26A** to **26D**) corresponding to each fragment identified by fragment discovery engine **12**. Fragment store may store fragments in the same database as document store **16** or may be a separate database.

Each record **26** identifies a corresponding fragment **20** by maintaining a copy of the fragment, maintaining a pointer **27** to the fragment (as illustrated) or somehow other maintaining an association between the record **26** and the corresponding fragment **20**. Each record **26** also includes or references metadata relating to the corresponding fragment **20**. The metadata may include any information that could be of assistance in understanding the operation of the fragment. Some examples of metadata are described below. Fragment store **16** may index records **26** using the metadata.

A document creation application **32**, such as a document editor, can access a fragment search engine **34** as indicated by arrow **35** to locate fragments **20** that could be used in the creation of a new document **14E**. Fragment search engine **34** may permit searching for fragments using various metadata or combinations of metadata.

Document creation application **32** can retrieve existing fragments **20** as indicated by line **36** for incorporation into document **14E**. Document creation application **32** may permit a user to reuse all or parts of selected fragments **20** and may permit the user to edit fragments **20** that have been retrieved.

In some embodiments, the functionality described herein is integrated into document creation application **32**. In other embodiments, the functionality described herein is made available by software that is invoked by, but is not integral with, document creation application **32**.

Typically document creation application **32** will present a user interface, such as a design canvas, that permits a user to define, create and edit a document. The user interface provides a means for a user to direct the insertion of visual report elements. The visual report elements may include report elements defined by fragments located by fragment search engine **34** and/or other report elements defined by the user, either based on templates or built from scratch.

The user interface may include a mechanism that permits the user to specify for any inserted visual report elements: connections to data sources, queries to perform, and the properties and behaviours of such visual report elements. Typically, the user interface permits a user to make meaningful modifications to visual report elements that have been inserted into a document.

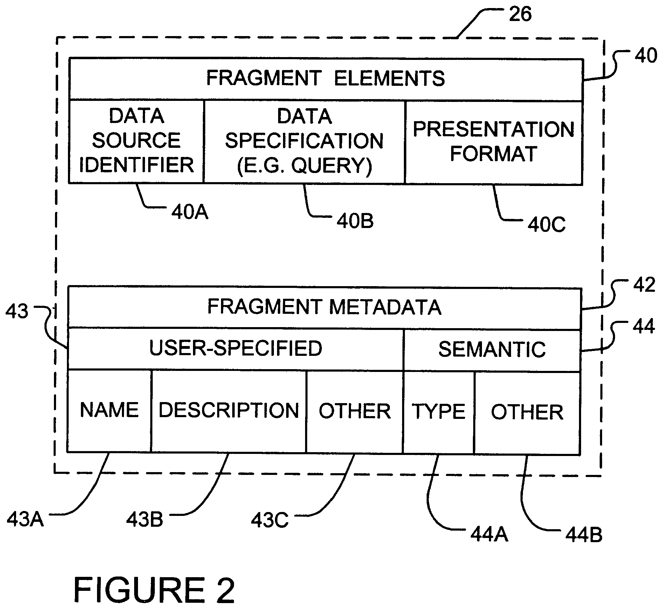

Figure 2 shows a record **26** corresponding to a fragment **20.** Record **26** includes (either directly or by referencing external information) functional fragment elements **40** and fragment metadata **42**. A fragment need not have all of the fragments elements **40**. Fragment elements **40** include one or more of a data source identifier **40A**, a data specification **40B**, which, for example, may comprise a query in any suitable query language, and a presentation format **40C**. Presentation format **40C** specifies how data retrieved from a data source identified by data source identifier **40A** using a data specification **40B** is to be displayed and formatted.

Fragment elements may be defined, for example, in a suitable report document format. An example of a suitable report document format is Report Definition Language (RDL) which operates according to the specifications published by Microsoft Corporation and is described at http://www.microsoft.com/sql/technologies/reporting/rdlspec.mspx. Alternatively, other report document formats may be used to define fragments.

Fragment metadata **42** may include one or both of user-specified metadata and semantic metadata. User-specified metadata may include, for example, a name **43A** and description **43B**. In addition or in the alternative, the user-specified metadata may include other user-specified information such as keywords. Semantic metadata may include information such as any one or more of a type **44A** and other information **44B** about the fragment that is extracted from the fragment itself, such as a document with which the fragment is associated, a data source that the fragment connects to, or other fragments that the fragment calls on.

In some embodiments of the invention, data presentation elements and data/query definition elements are separately available for reuse. In such embodiments, individual fragment elements **40** may have one or more of, but do not necessarily include all of data source identifier **40A**, data specification **40B** and presentation format **40C**.

More specific embodiments which work with documents that include RDL statements will now be described. In RDL, data presentation elements include a set of visual elements which operate over an entire query result (Data Regions), and a set of visual elements which contain either a single constant value, a binding to an individual data value, or a binding to the result of an expression. In general, presentation elements may contain within them other presentation elements.

Data Regions include charts, tables, lists, and matrices. Other visual elements include textboxes, rectangles, and images. Of these, tables, lists, matrices, and rectangles may all contain other visual elements. Each visual element may have within it expressions which perform calculations on values held within other elements at the same grouping level, or bind to values of a data element.

RDL data/query definition elements include Data Sources, Data Sets, and Parameters. The combination of these things defines any user input required for use in identifying required data, the data source to connect to, and the query to execute. Data resulting from the execution of queries is used by the presentation elements.

In one embodiment of the invention which operates on RDL source documents, the following are all considered to be reusable fragments:
(a) all presentation elements identified above which are direct children of the report canvas (that is, not those elements which are contained within other identified visual elements); and,
(b) all data/query definition elements.

In general, data connection and data query information may be considered reusable. If data connection and data query information are separated or separable in the document definition, they may be individually reusable. Otherwise, a single element which defines both a data connection and a data query may be considered reusable. Any presentation element that generates an understandable presentation of data, may be considered a reusable fragment. For example: graphs/charts, geographical maps, crosstabs, and repeating presentation sections which operate over a query result (such as report sections in some document formats like Crystal Reports .rpt) could all be treated as reusable fragments.

Fragment discovery engine **12** searches existing or new documents for potentially reusable fragments. In some embodiments, fragment discovery engine **12** compares the potentially reusable fragments in new documents to fragments that already exist in fragment store **25**. The potentially reusable fragments may be stored in fragment store **25** only if they differ in some significant respect from all other fragments that are already represented in fragment store **25**. This avoids the accumulation in fragment store **25** of multiple copies of the same fragment(s).

Fragment metadata associator **22** may provide a mechanism for capturing basic metadata for an identified fragment. Fragment metadata may include the following information:
(a) Fragment type, from the set of types available;
(b) Fragment name, as named by the user or automatically derived from visible aspects of the fragment if no meaningful name is given by the user.
(c) Fragment description, as specified by the user.

In a preferred embodiment, the above metadata is retrieved by reading values from the document definition as specified by the RDL specification. The metadata is then written into the metadata portion of the record **26** created for the current fragment in the fragment store **25**. The metadata portion of the record **26** may comprise statements in a mark-up language, such as XML. In an example embodiment, a root <properties> element is created, and a <property> sub-element is created for each property captured for the fragment. The <property> sub-elements contain one or more <value> sub-elements which, in turn, contain the value(s) for the given metadata property.

Fragment store **25** stores fragments (including associated metadata). The fragments and associated metadata are stored in one or more data structures. In an example embodiment, fragment store **25** comprises a database. The database may be a relational database. The database may comprise a SQL database, for example. Each fragment and its associated metadata are stored as a record in the database. The database can be queried to locate fragments based on any metadata values stored. The database may also be used as document store **16**.

In an example embodiment, each fragment is stored as a record in a table in a relational database hosted within Microsoft™ SQL Server Express. The table contains the fields listed in Table I.

| TABLE I | |
|---|---|
| FIELD | DESCRIPTION |
| ID | A unique identifier for the fragment |
| Type | The type of the fragment |
| XMLData | A stream of XML data which contains the complete element. The schema of this XML is as defined by the fragment type and the appropriate element in the RDL specification. |
| MetaData | A stream of XML data which contains all metadata captured for the fragment. This may include basic fragment metadata, fragment dependency metadata, and fragment semantic metadata, if those have been captured for the fragment. |

Alternative embodiments may use other suitable relational database systems; table schemas or the like to store fragments. Other means, such as an XML data structure or other data file, could be used to store fragments. The metadata and fragments could be stored in separate data sources (related to each other by key information) or within the same data source as described above.

The query technology in any particular implementation of fragment search engine **34** should be appropriate to fragment store **25**. In some embodiments, fragment search engine **34** can process a query which contains filtering criteria on fragment type and specifies a full-text search on all other fragment metadata. Where fragment store **25** contains a combination of XML fields and non-XML fields in an SQL database (as illustrated, for example, by Table I), fragment search engine **34** may use a combination of SQL and Xpath/Xquery to locate fragments that match a query. SQL queries may be used to query the non-XML fields that are exposed directly in the table. Xpath/Xquery may be used to perform the metadata query within the XML-based Metadata column. Fragment search engine **34** returns the results of that query in a format which enables fragments located by the search to be inserted into a document being created or edited.

In preferred embodiments, fragment search engine **34** can be accessed by way of an API which exposes a query model that allows a calling application or component to specify a full-text search string, the set of metadata fields to include in search, and type information to restrict which types of fragments will be returned. When a document creation application **32** triggers this query, a list of matching fragments, with the complete fragment definition included, is returned to the application **32** by fragment search engine **34**. In some embodiments, the query model presented by the exposed API permits the definition of separate queries that collectively identify fragments of potential interest. For example, the API query model may permit definition of a query for metadata and a separate query for other information about fragments.

In some embodiments, fragment search engine **34** may generate and execute two or more separate queries for each input query. This may be desirable especially in cases where fragments and their corresponding metadata are in separate stores.

There are a wide variety of possible mechanisms for integrating discovered fragments from fragment store **25** into a report document which a user is editing. In general, such mechanisms can insert a selected fragment into a document being created or edited. It is desirable that the mechanism include some way to resolve any conflicts caused by the fragment being inserted into the document.

In a preferred embodiment, information identifying a set of fragments resulting from a query of fragment store **25** is displayed to a user in the form of a list, a set of icons, or the like. The user selects a fragment from the list in any suitable manner provided by the user interface and adds the selected fragment to the document, again in any suitable manner provided by the user interface. For example, in some embodiments, the user can point a cursor to a representation of the fragment using a mouse or other pointing device to control the cursor and then click on the representation and drag it onto an editing window portion of the user interface representing the document.

Typically the query result which exposed the fragment to the user contains the functional part of the fragment (e.g. a set of one or more RDL statements that defines one or more of a data source, data selection, or presentation), the functional part of the fragment can be pasted into the appropriate place in the document as specified by the user.

As an example of a mechanism for resolving conflicts caused by the insertion of a fragment into a document, consider that some document formats require that each element defined within a document have a unique name or other identifier. If the document already contains elements which have names that are the same as the name of a fragment being inserted or named sub elements within the fragment, then the system may automatically rename the fragment and/or its conflicting sub elements so that the conflict does not exist. This may be done by using a numbering scheme to augment the existing name. For example, if a user wishes to insert into a document a fragment called SALESCHART and the document already includes an element called SALESCHART then the system may automatically rename the fragment being inserted to SALESCHART1, or the like. To facilitate conflict resolution, the system may maintain a list of elements in a document being edited. At a suitable time, for example, when a user indicates a desire to add a fragment to the document, the system can compare the fragment name or other identifier to the identifiers of elements in the list.

In some embodiments, the format in which fragments are stored in fragment store 25 may differ from the format in which fragments should be inserted into a document. Depending on the document format, translations may have to be done from the format stored within the repository to the target document's format or API format. An optional format translator **38** may be provided to perform this translation.

Alternative embodiments may insert fragments into documents by way of an API provided by document creation application **32**.

A system according to the invention may include various optional features and enhancements. For example, the nature and quantity of metadata that is associated with fragments can be varied. One type of metadata that may optionally be associated with fragments is fragment dependency metadata. Some report description languages permit the definition of fragments that depend upon other fragments. A system according to the invention may capture and store metadata relating to dependencies of an identified fragment as part of collecting and storing metadata relating to a fragment.

In an example embodiment, each fragment may have two types of dependencies:
(a) Direct top-level dependencies; and,
(b) Dependencies in sub-elements of a fragment.
A dependency may either specify dependency on a whole fragment or on some sub-element of a fragment. For example, consider an RDL Table (or any other Data Region, for that matter). At the highest level, the table has a dependency on a Data Set (which specifies a query to execute against a Data Source). This Data Set specifies the data context over which the table will operate. Within the table are a number of Textboxes. Some of these textboxes will refer to fields defined within the Data Set. The textboxes, which are sub-elements of the table fragment, depend on individual fields, which are sub-elements of the Data Set fragment. These sub-elements of fragments are themselves, fragments.

In a currently preferred embodiment, fragment dependencies are captured by analyzing the base properties of the fragment. The dependencies are stored within a metadata column of a fragment table in fragment store **25**. For each top-level dependency of the fragment, a dependency entry is created, which identifies the type and ID of the fragment which it is dependant on. For example, a sub-element <dependencies> is created within the metadata field for a given fragment, which contains a number of <dependency> sub-elements, each of which contains both a type and ID attribute.

Optionally, each sub-dependency may be separately captured and stored with path information to the sub-element in metadata for either or both of a consuming fragment (e.g. a fragment specifying presentation of data) or a producing fragment (e.g. a fragment specifying a data source and/or data specification). This is an optimization, and not mandatory as it is possible to compute sub-dependencies at later times (e.g. when a fragment is being integrated into a document).

Another kind of metadata that may optionally be associated with fragments is semantic metadata. Fragment metadata associator **22** may capture and store metadata relating to the semantic nature of an identified fragment. Semantic metadata may include classification information about a fragment, and/or interface information.

Classification information may include sub-type information (e.g. for CHART fragments, type of chart such as pie, bar, etc.) and other information (such as datatypes used for grouping, keywords used in vital attributes of the element, nature of X and Y axes for charts, etc.).

Interface information may include exposed and consumed interfaces. Exposed interfaces include all values contained within a fragment or its sub-elements (for example, for a Data Set fragment, each field exposed by the Data Set would form part of its exposed interface). Consumed interfaces include all values contained in another fragment which are consumed in the current fragment. In each case, the information captured may include the datatype and name of any individual sub-dependencies of the fragment.

In a currently preferred embodiment, classification metadata is added to the metadata in the same format described above. The names of the individual metadata fields added to describe the classification information will depend on the fragment type. Interface metadata is also stored within the metadata column of the fragment table in fragment store **25**. For each interface of the fragment, an interface entry is created, which identifies the type and name of the value exposed or consumed by the interface. For example, a sub-element <interfaces> is created within the metadata field for a given fragment, which contains a number of <field> sub-elements, each of which contains both a type and name attribute.

Another kind of metadata that may optionally be associated with a fragment is user-specified metadata. System **10** may include a mechanism for associating a user-specified set of metadata fields and their values with a fragment. This enables the user to specify additional fields to expose for a fragment, in addition to the value(s) to set for them.

In the currently preferred embodiment, a user running document creation application **32** can select for editing a fragment contained within a report document and select a metadata editing function for that fragment. The system then presents to the user a user interface that permits the user to add a new metadata field of their own creation or to add value(s) to any existing metadata fields. The system can then add the further metadata properties to the metadata field of the fragment table using, for example, the same mechanism as described above. Optionally a fragment management component **39** may be provided to facilitate managing the fragments in fragment store **25**. Fragment management component **39** may include an API that can be invoked from a document creation application **32** to allow a user to edit or add to the metadata associated with a fragment.

Other optional features relate to mechanisms for identifying fragments of interest. Fragment search engine **34** may provide a facility that permits a user to discover fragments of potential interest by directed browsing. This facility may comprise a mechanism for discovering fragments through a multi-level browser based on one or more metadata properties. The facility may present to a user a list or other identification of available metadata properties and, for each property, an identification of values represented in fragment store **25**.

A directed browsing facility may permit a user to use any number of the available properties, in any order, to locate fragments of potential interest by a tiered directed browse. For example, such a facility may permit a user to select one or more of the available values for one or more of the properties by interacting with a user interface in a suitable manner. In response, the system can execute a query which will return results which match one or more of the selected values for all of the selected properties.

In the currently preferred embodiment, an interface accessible to a user running the document creation application **32** presents a logical predefined multilevel browser. This browser includes fragment type, fragment name, and fragment description keyword in its set of properties to browse. This browser may execute queries and return sets of fragments that match the queries as described above.

In an alternative embodiment, an interface accessible to a user running the document creation application **32** permits the user to specify a browse path according to any number of the existent properties in the system.

Fragment search engine **34** may permit searches that are based entirely or in part on semantic metadata. This provides the ability to query for fragments based on properties such as classification information, interface information or some combination thereof. Searching for fragments by classification information may permit searching for fragments which satisfy criteria on specific metadata fields created as part of fragment semantic metadata. Searching for fragments by interface information may permit searching for fragments based on the degree to which they match interfaces as defined in fragment semantic metadata. For queries which specify certain exposed interfaces, a fragment will be considered to be a match if it exposes AT LEAST the individual values requested.

In a currently preferred embodiment, the query API for each of these semantic search types functions internally in ways similar to the APIs described above with respect to basic searching for, and retrieving fragments. Where each of the individual categorization and interface properties are stored in a similar format within an XML Metadata field of a fragment table, a mix of SQL and Xpath/Xquery may be used to identify fragments of potential interest.

Alternative embodiments may employ other suitable API and/or query mechanisms.

Where fragments may depend upon other fragments it can be desirable to provide a mechanism for resolving dependencies among fragments. This mechanism may be invoked to facilitate integrating fragments into documents.

When integrating a fragment into a document, if the fragment has any dependencies the system may check the document for occurrences of each of the dependencies. The dependencies may be identified by reviewing the fragment dependency metadata for fragments to be included in the document. If a fragment with the identity of the dependency is found in the document then that fragment may be used. Otherwise, the dependency may be resolved in one of the following ways:
(a) By locating the original dependency fragment using the fragment search engine **34** and the fragment dependency metadata and integrating that dependency fragment into the document.
(b) By locating another fragment of the same type as the dependency fragment which provides any interface elements of the dependency fragment that are used in the fragment (as specified in semantic metadata associated with the fragment). The other fragment may be located using fragment search engine **34** to search semantic metadata. This process may produce a list of one or more matching fragments, from which the user may be prompted to select one. Once the user has made a selection, the selected fragment is integrated into the document, as described herein. If the selected fragment is named differently than the original dependency fragment, references within the current fragment may be automatically updated to refer to the selected fragment (or the name of the selected fragment may be automatically changed to match the references in the current fragment).
(c) By locating a fragment within the current document which provides any interface elements of the dependency fragment that are used in the current fragment (as specified in semantic metadata associated with the current fragment). This process may produce a list of one or more matching fragments within the document. The user may be prompted to select one of the existing fragments to use as a dependency fragment for the current fragment. If the selected fragment is named differently from the original dependency fragment, references within the current fragment may be updated to refer to the selected fragment.

A system according to the invention optionally includes a mechanism for fragment versioning. Such a mechanism may track and discover new versions of fragments which a user has integrated into a document.

When an existing fragment is integrated into a document, if any meaningful changes are made to that fragment, the changed version of the fragment will automatically be added for fragment store **25**. The changed version of the fragment will then be available for reuse. System **10** may permit a user to open a document and cause system **10** to search for updated versions of any fragments that are present in the document. The system may present the user with the option of updating the document to include updated versions of any fragment(s) for which one or more updated versions exists in fragment store **25**. If the user so chooses, the document will be updated by integrating the updated version(s) of the fragment(s) in place of the existing fragment(s). The user may be provided with the opportunity to accept or reject the updated fragment on a fragment-by-fragment basis.

In the currently preferred embodiment, new versions of existing fragments are stored in the fragment store **25** together with the existing fragments. The fragment table is updated, augmenting the ID field as shown in Table II.

| Table II | |
|---|---|
| ID | The unique identifier for the fragment. |
| OriginalID | Te unique identifier for the first version of this fragment. If this is the first version, this field and ID are equal. |
| Timestamp | A field indicating the time the fragment was created or updated. |

In a preferred embodiment, the check for newer versions of fragments that are in the current document is performed by executing a query against the repository for any fragments that have the same OriginalID as a current fragment, but have newer timestamps.

A system **10** is not necessarily limited to a single user or to a single document store **16** or to a single fragment store **25**. In some embodiments there are multiple fragment stores **25**. For example, a separate fragment store **25** may be provided for each of a plurality of users. The fragment stores **25** may be located on a computer used primarily by one of the plurality of users.

System **10** may have a mechanism for sharing fragments with other users, and of utilizing fragments made available by other users. Such a mechanism can enable all features described herein to be distributed across many users. Such a mechanism may expose each user's fragment store **25** to other users of the system for fragment discovery and reuse. The mechanism may include a central index to fragment stores **25** or may permit searches of multiple fragment stores **25** (the fragment stores **25** searched may be user-selectable or determined automatically).

In some embodiments, system **10** operates on a computer of one user and fragment search engine **34** generates queries that are executed on a local fragment store **25** as well as on fragment stores **25** of other users in a peer-to-peer manner. In such embodiments, system **10** may comprise an interface for receiving queries from other systems **10**, executing those queries on one or more local fragment stores **25** and forwarding any results of the query to the system **10** from which the query originated by way of a network or other suitable data communication link.

In some embodiments, system **10** operates on a server accessible to multiple users.

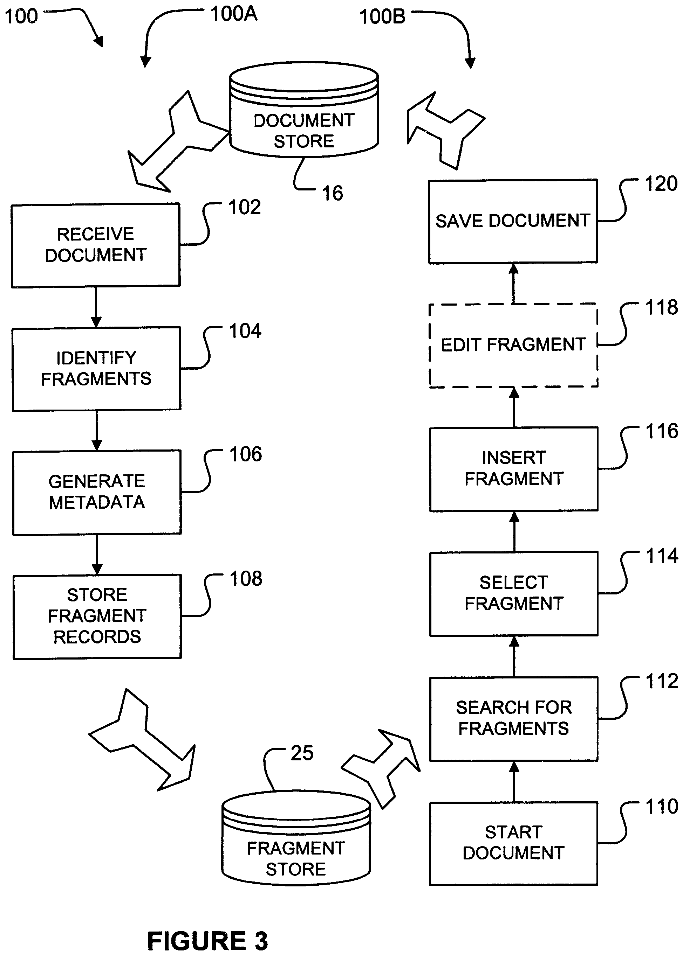

Figure 3 illustrates a method **100** according to an embodiment of the invention. Method **100** includes a fragment recovery method **100A** and a fragment reuse method **100B**. Methods **100A** and **100B** may be practiced independently as well as together.

Method **100A** begins with receiving a document in block **102**. The document may be in the process of being stored in a document repository **16** or may have been stored previously. In block **104** any reusable fragments within the document are identified. Block **104** may comprise searching the document for statements in RDL or some other language that correspond to defining data sources, defining data specifications (queries), defining data presentations, some combination of these, or are otherwise identified as potentially reusable fragments.

In block **106** metadata is identified for each of the fragments. The metadata may be more extensive or less extensive, as described above. In block **108** a record is made for each fragment in fragment store **25**. The record comprises some metadata which can be searched to determine whether the fragment may be of interest to a user and information that can be used to access the fragment. The information may be a copy of the fragment, instructions for recreating the fragment, a pointer to the fragment, a key, identifier or query that can be used to retrieve the fragment from some other database, or the like.

Fragment reuse method **100B** opens with starting a document at block **110**. Block **110** may comprise initiating a blank document, creating a new document from a template, opening an existing document for editing or the like. The document may comprise a report or other document in which it is desirable to include some representation of data.

Block **112** searches for fragments of potential interest. Block **112** may comprise receiving one or more search strings from user input and searching metadata in fragment store **25** for metadata that matches the search strings. Block **112** may comprise a directed search as described above.

In block **114** a fragment located by the search of block **112** is selected. In block **116** the selected fragment is inserted into the document. In block **118** the selected fragment is optionally edited. In block **120** the document is saved to document store **16**.

Certain implementations of the invention comprise computer processors which execute software instructions which cause the processors to perform a method of the invention. For example, one or more processors in a computer system or network may implement a method according to an embodiment of the invention executing software instructions in a program memory accessible to the processors. The invention may also be provided in the form of a program product. The program product may comprise any medium which carries a set of computer-readable signals comprising instructions which, when executed by a data processor, cause the data processor to execute a method of the invention. Program products according to the invention may be in any of a wide variety of forms. The program product may comprise, for example, media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.

Where a component (e.g. a computer, search engine, database, document, assembly, device, circuit, etc.) is referred to above, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

### Non-Limiting Application Examples

User John, has a good technical understanding of aspects of data sources, queries, and report design. John creates a document that is a SALES report. The SALES report specifies data source connection and query information, and includes a number of visual elements. The visual elements include a pie chart showing a breakdown of last year's sales by product and a table containing sales order details. John names each of the elements with some variation on the word Sales. He also enters descriptive information which describes the purpose of each of the main visual elements of the report. He then saves his report to his document store.

The system automatically identifies fragments of that report and extracts the fragments. The system tags the fragments with metadata including basic fragment metadata, fragment dependency metadata and fragment semantic metadata. The system inserts the fragments into a fragment store.

User Frank is a salesperson who is a competent computer user but does not understand how to build a document connected to data sources or build queries. He has been tasked with providing a report which shows a pie chart of last year's sales by product, which shows only the values for the top ten products. Frank opens a report creation application and creates a new report document. He selects the option to insert a chart, and chooses to search for existing charts. In the search criteria, he types "Sales".

At this point, a query is executed as described above. The results include the chart that John created earlier. Frank selects the chart created by John, and sees by the description that it is nearly exactly what he's looking for. He chooses to insert it into his report document.

At this point, the fragment representing John's chart is integrated into Frank's report. As the chart has dependencies to the data set and data source also created by John, these are automatically located and integrated. Frank now has a report which contains a sales chart. He proceeds to use the report creation application to modify the chart to show only the top ten products' sales. He now has a report which contains exactly the information he needs, so he proceeds to prepare the report and view the results.

While a number of exemplary aspects and embodiments have been discussed above, those of skill in the art will recognize certain modifications, permutations, additions and subcombinations thereof. For example in an alternative embodiment which operates on a different report document format, the precise set of reusable fragments identified would be different, depending on the specific breakdown of the document object model.

The invention encompasses all modifications, permutations, additions and subcombinations of the features described herein.

The following is a list of further examples of the invention:
Embodiment 1: A method of reusing information, comprising the steps of:
   a. retrieving a document from a first database;
   b. identifying a fragment within said document;
   c. generating metadata associated with said fragment; and
   d. storing a record associated with said fragment and said metadata in a second database, said second database searchable for said fragment for insertion of said fragment in a second document.
Embodiment 2: The method of embodiment 1 wherein said metadata includes at least one of: user-specified metadata; or semantic metadata.
Embodiment 3: The method of embodiment 2 wherein said metadata further includes at least one of: fragment type information; user-specified descriptive information; values parsed from said document; or values obtained from said document using an API.
Embodiment 4: The method of embodiment 3 wherein said record comprises elements of said fragment and said metadata associated with said fragment.
Embodiment 5: The method of embodiment 4 wherein said elements of said fragment comprise a data source identifier, a data specification and a presentation format.
Embodiment 6: The method of embodiment 5 wherein said fragment metadata further comprises fragment dependency data.
Embodiment 7: The method of embodiment 6 wherein said fragment dependency data is associated with a top- level dependency.
Embodiment 8: The method of embodiment 6 wherein said fragment dependency data is associated with a dependency in a sub-element of said fragment.
Embodiment 9: A method of providing information comprising the steps of:
   a. providing a document;
   b. searching a database for a fragment amongst a plurality of fragments, said database indexing said fragments using metadata associated with each of said fragments;
   c. inserting said fragment into said document; and
   d. saving said document in a second database.
Embodiment 10: The method of embodiment 9 wherein said metadata includes at least one of:
   user-specified metadata; or
   semantic metadata.
Embodiment 11: The method of embodiment 10 wherein said metadata further includes at least one of: fragment type information; user-specified descriptive information; values parsed from said document; or values obtained from said document using an API.
Embodiment 12: The method of embodiment 11 wherein said database comprises a plurality of records, one of said records comprising elements of said fragment and said metadata associated with said fragment.
Embodiment 13: The method of embodiment 12 wherein said elements of said fragment comprise a data source identifier, a data specification and a presentation format.
Embodiment 14: The method of embodiment 13 wherein said metadata further comprises fragment dependency data.
Embodiment 15: The method of embodiment 14 wherein said fragment dependency data is associated with a top-level dependency.
Embodiment 16: The method of embodiment 14 wherein said fragment dependency data is associated with a dependency in a sub-element of said fragment.
Embodiment 17: A document editable by a user, comprising:
   a fragment, wherein when the document is edited, said fragment is identified, metadata is associated with said fragment, and
   a record associated with said fragment is stored in a database of fragment records.
Embodiment 18: The document of embodiment 17 wherein said metadata includes at least one of: user-specified metadata; or semantic metadata.
Embodiment 19: The document of embodiment 18 wherein said metadata further includes at least one of:
   fragment type information;
   user-specified descriptive information;
   values parsed from said document;
   or values obtained from said document using an API.
Embodiment 20: The document of embodiment 19 wherein said record comprises elements of said fragment and said metadata associated with said fragment.
Embodiment 21: The document of embodiment 20 wherein said elements of said fragment comprise a data source identifier, a data specification and a presentation format.
Embodiment 22: The document of embodiment 21 wherein said metadata further comprises fragment dependency data.
Embodiment 23: The document of embodiment 22 wherein said fragment dependency data is associated with a top-level dependency.
Embodiment 24: The document of embodiment 22 wherein said fragment dependency data is associated with a dependency in a sub-element of said fragment.
Embodiment 25: A system for editing a document, comprising:
   a. means for retrieving a document from a first database;
   b. means for identifying a fragment within said document;
   c. means for associating metadata with said fragment;
   d. means for storing a record associated with said fragment in a second database;
   e. means for searching said second database for said record associated with said fragment; and
   f. means for inserting said fragment into a second document.
Embodiment 26: The system of embodiment 25 wherein said means for inserting comprises:
   f.1) means for determining if said fragment has a dependency on a second fragment;
   f.2) means for determining if said second fragment is within said document;
   f.3) means for locating said second fragment for insertion in said document.
Embodiment 27: A system for editing documents, comprising:
   a. a fragment discovery engine for identifying a fragment within a document;
   b. a fragment metadata associator for generating metadata for said fragment;
   c. a document editor for inserting said fragment in a second document;
   d. a fragment search engine;
   e. a database of records, each of said records associated with a related fragment and metadata associated with said related fragment;
   f. a user interface for locating said fragment from said database; and
   g. a first database for storage of said document.
Embodiment 28: A method of reusing information, comprising the steps of:
   a. retrieving a document from a database;
   b. identifying a fragment within said document;
   c. generating metadata associated with said fragment; and
   d. storing a record associated with said fragment and said metadata in said database, said database searchable for said fragment for insertion of said fragment in a second document.
Embodiment 29: The method of embodiment 28 wherein said metadata includes at least one of:
   user-specified metadata; or
   semantic metadata.
Embodiment 30: The method of embodiment 29 wherein said metadata further includes at least one of:
   fragment type information;
   user-specified descriptive information;
   values parsed from said document; or
   values obtained from said document using an API.
Embodiment 31: The method of embodiment 30 wherein said record comprises elements of said fragment and said metadata associated with said fragment.
Embodiment 32: The method of embodiment 31 wherein said elements of said fragment comprise a data source identifier, a data specification and a presentation format.
Embodiment 33: The method of embodiment 32 wherein said fragment metadata further comprises fragment dependency data.
Embodiment 34: The method of embodiment 33 wherein said fragment dependency data is associated with a top-level dependency.
Embodiment 35: The method of embodiment 33 wherein said fragment dependency data is associated with a dependency in a sub-element of said fragment.
Embodiment 36: A method of providing information comprising the steps of:
   a. providing a document;
   b. searching a database for a fragment amongst a plurality of fragments, said database indexing said fragments using metadata associated with each of said fragments;
   c. inserting said fragment into said document; and
   d. saving said document in said database.
Embodiment 37: The method of embodiment 36 wherein said metadata includes at least one of:
   user-specified metadata; or
   semantic metadata.
Embodiment 38: The method of embodiment 37 wherein said metadata further includes at least one of:
   fragment type information;
   user-specified descriptive information;
   values parsed from said document; or
   values obtained from said document using an API.
Embodiment 39: The method of embodiment 38 wherein said database comprises a plurality of records, one of said records comprising elements of said fragment and said metadata associated with said fragment.
Embodiment 40: The method of embodiment 39 wherein said elements of said fragment comprise a data source identifier, a data specification and a presentation format.
Embodiment 41: The method of embodiment 40 wherein said metadata further comprises fragment dependency data.
Embodiment 42: The method of embodiment 41 wherein said fragment dependency data is associated with a top-level dependency.
Embodiment 43: The method of embodiment 41 wherein said fragment dependency data is associated with a dependency in a sub-element of said fragment.
Embodiment 44: The method of embodiment 43 wherein said document includes RDL statements.
Embodiment 45: The method of embodiment 44 wherein said fragment is a presentation element.
Embodiment 46: The method of embodiment 44 wherein said fragment is a data/query definition element.
Embodiment 47: The method of embodiment 36, further comprising the step of determining if said fragment has a dependency on a second fragment.
Embodiment 48: The method of embodiment 47, further comprising the step of:
   if said fragment has a dependency on a second fragment, determining if said second fragment is within said document.
Embodiment 49: The method of embodiment 48, further comprising the step of:
   if said second fragment is not within said document, locating said second fragment and inserting said second fragment in said document.
Embodiment 50: A system for editing a document, comprising:
   a. means for retrieving a document from a database;
   b. means for identifying a fragment within said document;
   c. means for associating metadata with said fragment;
   d. means for storing a record associated with said fragment in said database;
   e. means for searching said second database for said record associated with said fragment; and
   f. means to insert said fragment into a second document.

## Claims

1. A method of reusing fragments and parts of fragments in creating and editing report documents, a report document including fragments for receiving data from one or more data sources based on a query for selecting relevant data from the one or more data sources and for specifying a manner of presenting the relevant data using visual report elements, the method comprising the steps of:
a) retrieving a report document (14A - 14D) from a first database (16);
b) identifying a fragment (20A - 20D) within said report document based on statements of a report document format language identified in the retrieved report document, the statements defining data sources or defining data specifications or defining data presentation formats or defining a combination of a data source, a data specification, and a data presentation format;
c) generating metadata (42) associated with said fragment, the metadata at least comprising fragment dependency data specifying a data source on which the fragment depends;
d) storing a record (26) associated with said fragment and said metadata in a second database (25), the record comprising a plurality of functional fragment elements (49), the functional fragment elements comprising
a data source identifier (40A), the data source identifier identifying a database,
a data specification (40B), the data specification including a query in a query language used by the database for retrieving relevant data from the database, and
a presentation format (40C), the presentation format specifying, based on a set of visual elements, how the data retrieved from the database is to be displayed and formatted;
e) identifying said fragment in the second database as a result of a search query to the metadata; and
f) inserting said fragment in a second report document (14E).

2. A method of creating and editing report documents, a report document including fragments for receiving data from one or more data sources based on a query for selecting relevant data from the one or more data sources and for specifying a manner of presenting the relevant data using visual report elements, based on reusing fragments and parts of fragments, the method comprising the steps of:
a) providing a report document (14E);
b) searching a database (25) for a fragment (26) amongst a plurality of fragments (26A - 26D), said database indexing said fragments using metadata associated with each of said fragments, the fragment comprising one or more functional fragment elements, the functional elements comprising a data source identifier (40A), the data source identifier identifying a database, a data specification (40B), the data specification including a query in a query language used by the database for retrieving relevant data from the database, and a presentation format (40C), the presentation format specifying, based on a set of visual elements, how the data retrieved from the database is to be displayed and formatted,
c) inserting said fragment into said report document based on statements of a report document format language defining the at least one fragment element; and
d) saving said report document in a second database (16).
wherein said metadata further comprises fragment dependency data specifying a data source on which the fragment depends;

3. The method of claim 1 or 2 wherein said metadata includes at least one of:
user-specified metadata (43); or
semantic metadata (44).

4. The method of claim 3 wherein said metadata (42) further includes at least one of: fragment type information (44A); user-specified descriptive information (43B); values parsed from said report document; or values obtained from said report document using an API.

5. The method of claim 4 wherein said fragment dependency data is associated with a top-level dependency and/or with a dependency in a sub-element of said fragment.

6. The method of claim 1 or 2 wherein said statements of a report document format language are Report Definition Language, RDL, statements, and wherein said fragment (26) is a presentation element comprising a presentation format and/or a data/query definition element comprising a data source identifier and a data specification.

7. The method of claim 2, further comprising the steps of:
determining based on the fragment dependency data if said fragment (26) has a dependency on a second fragment (26A - 26D),
if said fragment has a dependency on a second fragment, determining if said second fragment is within said report document (14E), and
if said second fragment is not within said report document, locating said second fragment and inserting said second fragment in said report document.

8. A system for creating and editing a report document, a report document including fragments for receiving data from one or more data sources based on a query for selecting relevant data from the one or more data sources and for specifying a manner of presenting the relevant data using visual report elements, based on reusing fragments and parts of fragments, the system comprising:
a) means for retrieving a report document (14A - 14D) from a first database (16);
b) means (12) for identifying a fragment (20A - 20D) within said report document based on statements of a report document format language identified in the retrieved report document, the statements defining data sources or defining data specifications or defining data presentation formats or defining a combination of a data source, a data specification, and a data presentation format;
c) means (22) for associating metadata (42) with said fragment, the metadata at least comprising fragment dependency data specifying a data source on which the fragment depends;
d) means (39) for storing a record (26) associated with said fragment and said metadata in a second database (25), the record comprising a plurality of functional fragment elements (40), the functional fragment elements at least comprising one of
a data source identifier (40A), the data source identifier identifying a database,
a data specification, (40B) the data specification including a query in a query language used by the database for retrieving relevant data from the database, and
a presentation format (40C) the presentation format specifying, based on a set of visual elements, how the data retrieved from the database is to be displayed and formatted;
e) means (34) for identifying said fragment in the second database as a result of a search query to the metadata; and
f) means (32) for inserting said fragment into a second report document (14E).

9. The system of claim 8 wherein said means for inserting comprises:
g) means for determining based on the fragment dependency data if said fragment has a dependency on a second fragment;
h) means for determining if said second fragment is within said document (14E);
i) means for locating said second fragment for insertion in said document.

10. A system for creating and editing report documents, a report document including fragments for receiving data from one or more data sources based on a query for selecting relevant data from the one or more data sources and for specifying a manner of presenting the relevant data using visual report elements, based on reusing fragments and parts of fragments, the system comprising:
a) a fragment discovery engine (12) for identifying a fragment (14A - 14D) within a report document (20A - 20D) based on statements of a report document format language identified in the report document, the statements defining data sources or defining data specifications or defining data presentation formats or defining a combination of a data source, a data specification, and a data presentation format;
b) a fragment metadata associator (22) for generating metadata for said fragment, the metadata at least comprising fragment dependency data specifying a data source on which the fragment depends;
c) a document editor (32) for inserting said fragment in a second report document (14E);
d) a fragment search engine (34);
e) a first database (25) of records (26A - 26D), each of said records associated with a related fragment and metadata (42) associated with said related fragment, each of said related fragments comprising one or more functional fragment elements (40), the fragment elements comprising a data source identifier (40A), the data source identifier identifying a database, a data specification (40B), the data specification including a query in a query language used by the database for retrieving relevant data from the database, and a presentation format (40C), the presentation format specifying, based on a set of visual elements, how the data retrieved from the database is to be displayed and formatted;
f) a user interface for locating said fragment from said first database, the user interface being configured for receiving a user specification of a fragment based on the metadata; and
g) a second database (16) for storage of said report document.

## Patentansprüche

1. Verfahren zur Wiederverwendung von Fragmenten und Teilen von Fragmenten beim Erzeugen und Editieren von Berichtdokumenten, wobei ein Berichtdokument Fragmente aufweist, um Daten von einer oder mehr Datenquellen auf der Basis einer Anfrage zu empfangen, um relevante Daten von der einen oder den mehr Quellen auszuwählen und eine Weise der Darstellung der relevanten Daten mittels visueller Berichtelemente zu spezifizieren, wobei das Verfahren die Schritte umfasst:
a) Abrufen eines Berichtdokuments (14A - 14D) von einer ersten Datenbank (16);
b) Identifizieren eines Fragments (20A - 20D) in dem Berichtdokument auf der Basis von Statements einer Berichtdokument-Formatsprache, die in dem abgerufenen Berichtdokument identifiziert wurde, wobei die Statements Datenquellen definieren oder Datenspezifikationen definieren oder Daten-Präsentationsformate definieren oder eine Kombination aus einer Datenquelle, einer Datenspezifikation und eines Datenpräsentationsformats definieren;
c) Erzeugen von mit dem Fragment verbundenen Metadaten (42), wobei die Metadaten wenigstens Fragment-Abhängigkeitsdaten umfassen, die eine Datenquelle spezifizieren, von der das Fragment abhängt;
d) Speichern eines zu dem Fragment und den Metadaten gehörenden Datensatzes (26) in einer zweiten Datenbank (25), wobei der Datensatz eine Vielzahl von funktionalen Fragmentelementen (49) umfasst, wobei die funktionalen Fragmentelemente
einen Datenquellen-Identifikator (40A), wobei der Datenquellen-Identifikator eine Datenbank identifiziert,
eine Datenspezifikation (40B), wobei die Datenspezifikation eine Anfrage in einer Anfragesprache aufweist, die durch die Datenbank verwendet wird, um relevante Daten von der Datenbank abzurufen, und
ein Präsentationsformat (40C) umfassen, wobei das Präsentationsformat auf der Basis eines Satzes von visuellen Elementen spezifiziert, wie die von der Datenbank abgerufenen Daten anzuzeigen und zu formatieren sind;
e) Identifizieren des Fragments in der zweiten Datenbank als ein Ergebnis einer Suchanfrage nach den Metadaten; und
f) Einsetzen des Fragments in ein zweites Berichtdokument (14E).

2. Verfahren zum Erzeugen und Editieren von Berichtdokumenten, wobei ein Berichtdokument Fragmente zum Empfangen von Daten von einer oder mehr Datenquellen auf der Basis einer Anfrage aufweist, um relevante Daten von der einen oder den mehr Datenquellen auszuwählen und eine Weise der Darstellung der relevanten Daten mittels visueller Berichtelemente auf der Basis der Wiederverwendung von Fragmenten und Teilen von Fragmenten zu spezifizieren, wobei das Verfahren die Schritte umfasst:
a) Bereitstellen eines Berichtdokuments (14E);
b) Suchen einer Datenbank (25) für ein Fragment (26) unter einer Vielzahl von Fragmenten (26A - 26D), wobei die Datenbank die Fragmente mittels Metadaten indiziert, die mit jedem der Fragmente verbunden sind, wobei das Fragment ein oder mehr funktionale Fragmentelemente umfasst, wobei die funktionalen Elemente einen Datenquellen-Identifikator (40A), wobei der Datenquellen-Identifikator eine Datenbank identifiziert, eine Datenspezifikation (40B), wobei die Datenspezifikation eine Anfrage in einer Anfragesprache aufweist, die von der Datenbank verwendet wird, um relevante Daten von der Datenbank abzurufen, und ein Präsentationsformat (40C) umfassen, wobei das Präsentationsformat auf der Basis eines Satzes von visuellen Elementen spezifiziert, wie die von der Datenbank abgerufenen Daten anzuzeigen und zu formatieren sind,
c) Einsetzen des Fragments in das Berichtdokument auf der Basis von Statements einer Berichtdokument-Formatsprache, die wenigstens ein Fragmentelement definiert; und
d) Speichern des Berichtdokuments in einer zweiten Datenbank (16),
wobei die Metadaten des Weiteren Fragment-Abhängigkeitsdaten umfassen, die eine Datenquelle spezifizieren, von der das Fragment abhängt.

3. Verfahren nach Anspruch 1 oder 2, wobei die Metadaten wenigstens umfassen:
anwenderspezifische Metadaten (43); oder
semantische Metadaten (44).

4. Verfahren nach Anspruch 3, wobei die Metadaten (42) des Weiteren wenigstens aufweisen:
Fragmenttypinformationen (44A); anwenderspezifische beschreibende Informationen (43B); anhand des Berichtdokuments gegliederte Werte oder Werte, die anhand des Berichtdokuments mittels einer API (Programmierschnittstelle) gewonnen wurden.

5. Verfahren nach Anspruch 4, wobei die Fragment-Abhängigkeitsdaten mit einer Abhängigkeit auf oberster Ebene und/oder mit einer Abhängigkeit in einem Unterelement des Fragments verbunden sind.

6. Verfahren nach Anspruch 1 oder 2, wobei die Statements einer Berichtdokument-Formatsprache Statements in der Berichtdefinitionssprache (Report Definition Language - RDL) sind und wobei das Fragment (26) ein Präsentationselement, das ein Präsentationsformat umfasst, und/oder ein Daten-/Anfrage-Definitionselement ist, das einen Datenquellen-Identifikator und eine Datenspezifikation umfasst.

7. Verfahren nach Anspruch 2, das des Weiteren die Schritte umfasst:
Feststellen auf der Basis der Fragment-Abhängigkeitsdaten, ob das Fragment (26) eine Abhängigkeit von einem zweiten Fragment (26A - 26D) hat,
wenn das Fragment eine Abhängigkeit von einem zweiten Fragment hat, Feststellen, ob sich das zweite Fragment in dem Berichtdokument (14E) befindet und,
wenn sich das zweite Fragment nicht in dem Berichtdokument befindet, Lokalisieren des zweiten Fragments und Einsetzen des zweiten Fragments in das Berichtdokument.

8. System zum Erzeugen und Editieren eines Berichtdokuments, wobei ein Berichtdokument Fragmente zum Empfangen von Daten von einer oder mehr Datenquellen auf der Basis einer Anfrage aufweist, um relevante Daten von der einen oder den mehr Datenquellen auszuwählen und eine Weise der Darstellung der relevanten Daten mittels visueller Berichtelemente auf der Basis der Wiederverwendung von Fragmenten und Teilen von Fragmenten zu spezifizieren, wobei das System umfasst:
a) Mittel zum Abrufen eines Berichtdokuments (14A - 14D) von einer ersten Datenbank (16);
b) Mittel (12) zum Identifizieren eines Fragments (20A - 20D) in dem Berichtdokument auf der Basis von Statements einer Berichtdokument-Formatsprache, die in dem abgerufenen Berichtdokument identifiziert wird, wobei die Statements Datenquellen definieren oder Datenspezifikationen definieren oder Daten-Präsentationsformate definieren oder eine Kombination aus einer Datenquelle, einer Datenspezifikation und einem Daten-Präsentationsformat definieren;
c) Mittel (22) zum Assoziieren von Metadaten (42) mit dem Fragment, wobei die Metadaten wenigstens Fragment-Abhängigkeitsdaten umfassen, die eine Datenquelle spezifizieren, von der das Fragment abhängt;
d) Mittel (39) zum Speichern eines mit dem Fragment und den Metadaten in der zweiten Datenbank (25) verbundenen Datensatzes (26), wobei der Datensatz eine Vielzahl von funktionalen Fragmentelementen (40) umfasst, wobei die funktionalen Fragmentelemente wenigstens
einen Datenquellen-Identifikator (40A), wobei der Datenquellen-Identifikator eine Datenbank identifiziert,
eine Datenspezifikation (40B), wobei die Datenspezifikation eine Anfrage in einer Anfragesprache aufweist, die von der Datenbank verwendet wird, um relevante Daten von der Datenbank abzurufen, und ein Präsentationsformat (40C) umfassen, wobei das Präsentationsformat auf der Basis eines Satzes von visuellen Elementen spezifiziert, wie die von der Datenbank abgerufenen Daten anzuzeigen und zu formatieren sind;
e) Mittel (34) zum Identifizieren des Fragments in der zweiten Datenbank als ein Ergebnis einer Suchanfrage nach den Metadaten; und
f) Mittel (32) zum Einsetzen des Fragments in ein zweites Berichtdokument (14E).

9. System nach Anspruch 8, wobei die Mittel zum Einsetzen umfassen:
g) Mittel zum Feststellen auf der Basis der Fragment-Abhängigkeitsdaten, ob das Fragment eine Abhängigkeit von einem zweiten Fragment hat;
h) Mittel zum Feststellen, ob sich das zweite Fragment in dem Dokument (14E) befindet;
i) Mittel zum Lokalisieren des zweiten Fragments zum Einsetzen in das Dokument.

10. System zum Erzeugen und Editieren eines Berichtdokuments, wobei ein Berichtdokument Fragmente zum Empfangen von Daten von einer oder mehr Datenquellen auf der Basis einer Anfrage aufweist, um relevante Daten von der einen oder den mehr Datenquellen auszuwählen und eine Weise der Darstellung der relevanten Daten mittels visueller Berichtelemente auf der Basis der Wiederverwendung von Fragmenten und Teilen von Fragmenten zu spezifizieren, wobei das System umfasst:
a) eine Fragment-Entdeckungsmaschine (12) zum Identifizieren eines Fragments (14A - 14D) in einem Berichtdokument (20A - 20D) auf der Basis von Statements einer in dem Berichtdokument identifizierten Berichtdokument-Formatsprache, wobei die Statements Datenquellen definieren oder Datenspezifikationen definieren oder Daten-Präsentationsformate definieren oder eine Kombination aus einer Datenquelle, einer Datenspezifikation und einem Daten-Präsentationsformat definieren;
b) einen Fragmentmetadaten-Assoziator (22) zum Erzeugen von Metadaten für das Fragment, wobei die Metadaten wenigstens Fragment-Abhängigkeitsdaten umfassen, die eine Datenquelle spezifizieren, von der das Fragment abhängt;
c) einen Dokument-Editor (32) zum Einsetzen des Fragments in ein zweites Berichtdokument (14E);
d) eine Fragment-Suchmaschine (34);
e) eine erste Datenbank (25) von Datensätzen (26A - 26D), wobei jeder der Datensätze mit einem verwandten Fragment verbunden ist und Metadaten (42) mit dem verwandten Fragment verbunden sind, wobei jedes der verwandten Fragmente ein oder mehr funktionale Fragmentelemente (40) umfasst, wobei die Fragmentelemente einen Datenquellen-Identifikator (40A), wobei der Datenquellen-Identifikator eine Datenbank identifiziert, eine Datenspezifikation (40B), wobei die Datenspezifikation eine Anfrage in einer Anfragesprache aufweist, die von der Datenbank verwendet wird, um relevante Daten von der Datenbank abzurufen, und ein Präsentationsformat (40C) umfassen, wobei das Präsentationsformat auf der Basis von visuellen Elementen spezifiziert, wie die von der Datenbank abgerufenen Daten anzuzeigen und zu formatieren sind;
f) eine Anwenderschnittstelle zum Lokalisieren des Fragments anhand der ersten Datenbank, wobei die Anwenderschnittstelle konfiguriert ist, um eine Anwenderspezifikation eines Fragments auf der Basis der Metadaten zu empfangen; und
g) eine zweite Datenbank (16) zum Speichern des Berichtdokuments.

## Revendications

1. Procédé de réutilisation de fragments et parties de fragments pour créer et éditer des documents de compte-rendu, un document de compte-rendu incluant des fragments destinés à recevoir des données provenant d'une ou de plusieurs sources de données sur la base d'une requête de sélection de données pertinentes auprès de la ou des sources de données, et à spécifier une manière de présenter les données pertinentes en utilisant des éléments de compte-rendu visuels, le procédé comprenant les étapes consistant à :
a) extraire un document de compte-rendu (14A - 14D) d'une première base de données (16) ;
b) identifier un fragment (20A - 20D) à l'intérieur dudit document de compte-rendu sur la base d'énoncés d'un langage de format de document de compte-rendu identifié dans le document de compte-rendu extrait, les énoncés définissant des sources de données ou définissant des spécifications de données ou définissant des formats de présentation de données ou définissant une combinaison d'une source de données, d'une spécification de données et d'un format de présentation de données ;
c) générer des métadonnées (42) associées audit fragment, les métadonnées comprenant au moins des données de dépendance de fragment spécifiant une source de données dont le fragment dépend ;
d) enregistrer un article (26) associé audit fragment et auxdites métadonnées dans une seconde base de données (25), l'article comprenant une pluralité d'éléments de fragment fonctionnels (40), les éléments de fragment fonctionnels comprenant
un identifiant de source de données (40A), l'identifiant de source de données identifiant une base de données,
une spécification de données (40B), la spécification de données incluant une requête dans un langage de requête utilisé par la base de données pour extraire des données pertinentes de la base de données, et
un format de présentation (40C), le format de présentation spécifiant, sur la base d'un ensemble d'éléments visuels, la manière dont les données extraites de la base de données devront être affichées et formatées ;
e) identifier ledit fragment dans la seconde base de données suite à une requête de recherche portant sur les métadonnées ; et
f) insérer ledit fragment dans un second document de compte-rendu (14E).

2. Procédé de création et d'édition de documents de compte-rendu, un document de compte-rendu incluant des fragments destinés à recevoir des données provenant d'une ou de plusieurs sources de données sur la base d'une requête de sélection de données pertinentes auprès de la ou des sources de données, et à spécifier une manière de présenter les données pertinentes en utilisant des éléments de compte-rendu visuels, ceci en réutilisant des fragments et parties de fragments, le procédé comprenant les étapes consistant à :
a) produire un document de compte-rendu (14E) ;
b) chercher un fragment (26) parmi une pluralité de fragments (26A - 26D) dans une base de données (25), ladite base de données indexant lesdits fragments en utilisant des métadonnées associées à chacun desdits fragments, le fragment comprenant un ou plusieurs éléments de fragment fonctionnels, les éléments fonctionnels comprenant un identifiant de source de données (40A), l'identifiant de source de données identifiant une base de données, une spécification de données (40B), la spécification de données incluant une requête dans un langage de requête utilisé par la base de données pour extraire des données pertinentes de la base de données, et un format de présentation (40C), le format de présentation spécifiant, sur la base d'un ensemble d'éléments visuels, la manière dont les données extraites de la base de données devront être affichées et formatées,
c) insérer ledit fragment dans ledit document de compte-rendu sur la base d'énoncés d'un langage de format de document de compte-rendu définissant l'au moins un élément de fragment ; et
d) sauvegarder ledit document de compte-rendu dans une seconde base de données (16),
lesdites métadonnées comprenant, en outre, des données de dépendance de fragment spécifiant une source de données dont le fragment dépend.

3. Procédé selon la revendication 1 ou 2, lesdites métadonnées incluant au moins :
des métadonnées (43) spécifiées par un utilisateur ; et/ou
des métadonnées sémantiques (44).

4. Procédé selon la revendication 3, lesdites métadonnées (42) incluant, en outre, au moins :
une information de type de fragment (44A) ; et/ou une information descriptive (43B) spécifiée par un utilisateur ; et/ou des valeurs analysées à partir dudit document de compte-rendu ; et/ou des valeurs obtenues à partir dudit document de compte-rendu en utilisant une API.

5. Procédé selon la revendication 4, lesdites données de dépendance de fragment étant associées à une dépendance de niveau supérieur et/ou à une dépendance dans un sous-élément dudit fragment.

6. Procédé selon la revendication 1 ou 2, lesdits énoncés d'un langage de format de document de compte-rendu étant des énoncés de langage de définition de compte-rendu, soit RDL, et ledit fragment (26) étant un élément de présentation comprenant un format de présentation et/ou un élément de définition de données/requête comprenant un identifiant de source de données et une spécification de données.

7. Procédé selon la revendication 2, comprenant, en outre, les étapes consistant à:
déterminer, sur la base des données de dépendance de fragment, si ledit fragment (26) a une dépendance vis-à-vis d'un second fragment (26A - 26D),
si ledit fragment a une dépendance vis-à-vis d'un second fragment, déterminer si ledit second fragment est contenu dans ledit document de compte-rendu (14E), et,
si ledit second fragment n'est pas contenu dans ledit document de compte-rendu, localiser ledit second fragment et insérer ledit second fragment dans ledit document de compte-rendu.

8. Système de création et d'édition d'un document de compte-rendu, un document de compte-rendu incluant des fragments destinés à recevoir des données provenant d'une ou de plusieurs sources de données sur la base d'une requête de sélection de données pertinentes auprès de la ou des sources de données, et à spécifier une manière de présenter les données pertinentes en utilisant des éléments de compte-rendu visuels, ceci en réutilisant des fragments et parties de fragments, le système comprenant :
a) un moyen pour extraire un document de compte-rendu (14A - 14D) d'une première base de données (16) ;
b) un moyen (12) pour identifier un fragment (20A - 20D) à l'intérieur dudit document de compte-rendu sur la base d'énoncés d'un langage de format de document de compte-rendu identifié dans le document de compte-rendu extrait, les énoncés définissant des sources de données ou définissant des spécifications de données ou définissant des formats de présentation de données ou définissant une combinaison d'une source de données, d'une spécification de données et d'un format de présentation de données ;
c) un moyen (22) pour associer des métadonnées (42) audit fragment, les métadonnées comprenant au moins des données de dépendance de fragment spécifiant une source de données dont le fragment dépend ;
d) un moyen (39) pour enregistrer un article (26) associé audit fragment et auxdites métadonnées dans une seconde base de données (25), l'article comprenant une pluralité d'éléments de fragment fonctionnels (40), les éléments de fragment fonctionnels comprenant au moins
un identifiant de source de données (40A), l'identifiant de source de données identifiant une base de données, et/ou
une spécification de données (40B), la spécification de données incluant une requête dans un langage de requête utilisé par la base de données pour extraire des données pertinentes de la base de données, et/ou
un format de présentation (40C), le format de présentation spécifiant, sur la base d'un ensemble d'éléments visuels, la manière dont les données extraites de la base de données devront être affichées et formatées ;
e) un moyen (34) pour identifier ledit fragment dans la seconde base de données suite à une requête de recherche portant sur les métadonnées ; et
f) un moyen (32) pour insérer ledit fragment dans un second document de compte-rendu (14E).

9. Système selon la revendication 8, ledit moyen d'insertion comprenant :
g) un moyen pour déterminer, sur la base des données de dépendance de fragment, si ledit fragment a une dépendance vis-à-vis d'un second fragment ;
h) un moyen pour déterminer si ledit second fragment est contenu dans ledit document (14E) ;
i) un moyen pour localiser ledit second fragment en vue de son insertion dans ledit document.

10. Système de création et d'édition de documents de compte-rendu, un document de compte-rendu incluant des fragments destinés à recevoir des données provenant d'une ou de plusieurs sources de données sur la base d'une requête de sélection de données pertinentes auprès de la ou des sources de données, et à spécifier une manière de présenter les données pertinentes en utilisant des éléments de compte-rendu visuels, ceci en réutilisant des fragments et parties de fragments, le système comprenant :
a) un moteur de découverte de fragment (12) pour identifier un fragment (14A - 14D) à l'intérieur d'un document de compte-rendu (20A - 20D) sur la base d'énoncés d'un langage de format de document de compte-rendu identifié dans le document de compte-rendu, les énoncés définissant des sources de données ou définissant des spécifications de données ou définissant des formats de présentation de données ou définissant une combinaison d'une source de données, d'une spécification de données et d'un format de présentation de données ;
b) un moyen d'association (22) de métadonnées de fragment pour générer des métadonnées pour ledit fragment, les métadonnées comprenant au moins des données de dépendance de fragment spécifiant une source de données dont le fragment dépend ;
c) un éditeur de document (32) pour insérer ledit fragment dans un second document de compte-rendu (14E) ;
d) un moteur de recherche de fragment (34) ;
e) une première base de données (25) d'articles (26A - 26D), chacun desdits articles étant associé à un fragment connexe et aux métadonnées (42) associées audit fragment connexe, chacun desdits fragments connexes comprenant un ou plusieurs éléments de fragment fonctionnels (40), les éléments de fragment comprenant un identifiant de source de données (40A), l'identifiant de source de données identifiant une base de données, une spécification de données (40B), la spécification de données incluant une requête dans un langage de requête utilisé par la base de données pour extraire des données pertinentes de la base de données, et un format de présentation (40C), le format de présentation spécifiant, sur la base d'un ensemble d'éléments visuels, la manière dont les données extraites de la base de données devront être affichées et formatées ;
f) une interface utilisateur pour localiser ledit fragment à partir de ladite première base de données, l'interface utilisateur étant configurée pour recevoir une spécification d'utilisateur d'un fragment sur la base des métadonnées ; et
g) une seconde base de données (16) pour enregistrer ledit document de compte-rendu.
